# EUROPEAN PATENT APPLICATION

(11) **EP 2 290 117 A1**
(43) Date of publication of application: **02.03.2011**
(21) Application number: 10173661.9
(22) Date of filing: 23.08.2010
(51) Int. Cl.: C23C 4/08, C23C 4/12, C23C 28/00, F01D 5/28, H05H 1/34

(54) **Method of depositing protective coatings on turbine combustion components**

(30) Priority: 27.08.2009 US 548662
(71) Applicant: General Electric Company, Schenectady, NY 12345 (US)
(72) Inventor: Margolies, Joshua Lee, Schenectady, NY 12345 (US); Lau, Yuk-Chiu, Schenectady, NY 12345 (US); Bucci, David Vincent, Greenville, SC 29615 (US)
(74) Representative: Szary, Anne Catherine

(57) **Abstract**

A method is provided for high velocity air plasma spraying (APS) application of a protective coating system, such as a bond coat with or without an overlying ceramic thermal barrier coat, to a superalloy metal substrate. Application of MCrAlY alloy bond particles (where M is at least one of iron, cobalt, or nickel) onto the metal substrate is maintained at a particle velocity of at least 400 meters per second (m/s), for example within a range of 400 m/s to 700 m/s. The resulting bond coat on the metal substrate has a surface roughness of about 300 to about 500 µinch Ra, and a density of at least 90% of theoretical density. The protective coating may include a ceramic thermal barrier coat applied over the bond coat by any suitable process.

## Description

### FIELD OF THE INVENTION

The present invention relates generally to protective coatings applied to metal substrates. More specifically, the invention is directed to methods for air plasma spraying of a bond coat onto a substrate, e.g., to a turbine engine combustion component.

### BACKGROUND

Higher operating temperatures for gas turbine engines are continuously sought in order to increase their efficiency. However, as operating temperatures increase, the high temperature durability of the components of the engine must correspondingly increase. Significant advances in high temperature capabilities have been achieved through the formulation of nickel and cobalt-base superalloys, and through the development of oxidation-resistant overlay coatings which are generally single-layer coatings or diffusions deposited directly on the surface of the superalloy substrate to form a protective oxide scale during high temperature exposure. Nonetheless, superalloys protected by overlay coatings often do not retain adequate mechanical properties for components located in certain sections of a gas turbine engine, such as the turbine, combustor and augmentor. A common solution is to thermally insulate such components in order to minimize their service temperatures. For this purpose, thermal barrier coating (TBC) systems formed on the exposed surfaces of high temperature components have found wide use.

To be effective, thermal barrier coating systems must have low thermal conductivity, strongly adhere to the article, and remain adherent throughout many heating and cooling cycles. The latter requirement is particularly demanding due to the different coefficients of thermal expansion between materials having low thermal conductivity and superalloy materials typically used to form turbine engine components. Thermal barrier coating systems capable of satisfying the above requirements generally require a metallic bond coat deposited on the component surface, followed by an adherent thermal barrier ceramic layer that serves to thermally insulate the component.

Various ceramic materials have been employed as the thermal barrier layer, particularly zirconia (ZrO₂) stabilized by yttria (Y₂ O₃), magnesia (MgO), ceria (CeO₂), scandia (Sc₂O₃), or another oxide. These particular materials are widely employed in the art because they can be readily deposited by plasma spray, flame spray and vapor deposition techniques. In order to increase the resistance of the ceramic layer to spallation when subjected to thermal cycling, thermal barrier coating systems employed in higher temperature regions of a gas turbine engine have been typically deposited by physical vapor deposition (PVD) techniques, particularly electron beam physical vapor deposition (EBPVD), that yield a spall-resistant columnar grain structure in the ceramic layer.

The bond coat is typically formed from an oxidation-resistant aluminum-containing alloy to promote adhesion of the ceramic layer to the component and inhibit oxidation of the underlying superalloy. Examples of prior art bond coats include overlay coatings such as MCrAlY (where M is iron, cobalt and/or nickel), and diffusion coatings such as diffusion aluminide or platinum aluminide, which are oxidation-resistant aluminum-base intermetallics. The bond coat is typically disposed on the substrate by a thermal spray processes, such as vacuum plasma spray (VPS) (also know as low pressure plasma spraying (LPPS)), air plasma spray (APS), and hyper-velocity oxy-fuel (HVOF) spray processes.

VPS (LPPS) techniques produce a dense and relatively oxide-free bond coat that is desired for critical gas turbine components, such as buckets/blades. However, these systems are relatively complex and require a significant capital outlay. The systems require high power consumption equipment, multiple spraying and vacuum chambers for components of different size, and involve time consuming process cycles. Coating of gas turbine components by VPS techniques can be economically unfeasible.

Bond coats deposited by HVOF are desirable in that a very dense and generally oxide-free coat can be produced as a result of the high particle velocity achievable in HVOF process. However, the present commercially available HVOF guns and system are not well suited for turbine combustion components. In particular, the conventional HVOF guns are relatively long and require a separation distance from the surface being coated of from about 8 to about 15 inches and, thus, do not fit into the relatively small inside diameters of the turbine combustion components. In addition, bond coats deposited by HVOF are sensitive to particle size distributions, generally requiring finer particles. Conventional HVOF guns use particles ranging from -45 / +10 µm, which are fmer than that used in APS process. Thermico Gmbh & Co KG of Dortmund, Germany, has developed a small-size HVOF gun that uses even finer particles (< 20µm), which are expensive and not readily available. In addition, the Thermico system deposits material five-times slower than conventional HVOF systems. The finer particles results in HVOF-applied bond coats with relatively smooth surface roughness (an undesired characteristic). Rough bond coats can be deposited by HVOF using coarser powders, for example particles with a size about -230 / +325 mesh; however the relative low HVOF flame temperatures results in the bond coat comprising un-melted powders, therefore the coating is porous and less dense.

APS bond coating techniques are often favored due to lower equipment cost and ease of application and masking. In addition, adherence of the thermal barrier coat to the bond coat is, in part, a function of the structure and roughness of the bond coat surface, and an APS process produces rough bond coats because of the relatively large powders used in APS. Adhesion of the ceramic layer to an APS bond coat is promoted by forming the bond coat to have a surface roughness of about 200 microinches (about 5 µm) to about 500 microinches (about 13 µm) Ra (Arithmetic Average Roughness (Ra) as determined from ANSI/ASME Standard B461-1985).

Although APS-applied bond coats provide better TBC adhesion due to their roughness, because the APS bond coats are deposited at an elevated temperature in the presence of air, they inherently contain a high oxides content and are more prone to thermal growth oxidation (TGO) because they do not form a continuous oxide scale. Also, APS-applied bond coats possess a relatively low density due to the oxidation environment and low momentum of the powders.

Accordingly, the art would benefit from an improved commercially viable APS process for bond coat deposition that produces a dense and relatively oxide-free bond coat having a desired degree of surface roughness without the inherent drawbacks of VPS and HVOF systems. Such an improved APS process and system should be comparable in cost and efficiency to conventional APS systems.

### BRIEF DESCRIPTION OF THE INVENTION

Aspects and advantages of the invention will be set forth in part in the following description, or may be obvious from the description, or may be learned through practice of the invention.

The present invention provides a method for high velocity air plasma spraying (HV-APS) application of a protective coating system, such as a bond coat with or without an overlying ceramic thermal barrier coat, to a superalloy metal substrate. The invention may be advantageous in any application wherein a thermal bond coat is desired, such as the automotive industry, and the like. The invention has particular usefulness in a gas turbine environment for coating any manner of turbine component, including shrouds, buckets, nozzles and combustion liners, caps, and so forth.

An embodiment of the present inventive method includes HV-APS application of MCrAlY alloy bond particles (where M is at least one of iron, cobalt, or nickel) onto the metal substrate at a particle velocity of at least 400 meters per second (m/s), for example within a range of 400 m/s to 700 m/s. The bond coat particles have a composition and particle size distribution range so that, at the given particle velocity, the resulting bond coat on the metal substrate has a surface roughness of about 300 to about 500 µinch Ra. The resulting bond coat also has a density of at least 90% of theoretical density. The protective coating may include a ceramic thermal barrier coat applied over the bond coat by any suitable process, including an HV-APS or other process.

The invention also includes any manner of metal substrate component having a protective coating system formed thereon in accordance with aspects of the invention. The component includes a superalloy metal substrate, such as a Ni or Co based superalloy, having an HV-APS bond coat applied to the surface of the substrate. The HV-APS bond coat is sprayed from MCrAlY alloy particles (where M is at least one of iron, cobalt, or nickel) at an APS particle velocity of at least 400 meters per second (m/s). The bond coat has a surface roughness of about 300 to about 500 pinch Ra, and a density of at least 90% of theoretical density. The protective coating system may further include a thermal barrier coat, such as a ceramic thermal barrier material, applied over the bond coat in an APS, HV-APS, or other process.

These and other embodiments and features of the invention will be described in greater detail in the following description.

### BRIEF DESCRIPTION OF THE DRAWINGS

A full and enabling disclosure of the present invention, including the best mode thereof, directed to one of ordinary skill in the art, is set forth in the specification, which makes reference to the appended figures by way of example, in which:

FIG. 1 is a view of a conventional a conventional gas turbine combustion chamber;

FIG. 2A is a micrograph illustration of an HV-APS bond coat from a process in accordance with aspects of the present invention;

FIG. 2B is a micrograph illustration of an APS bond coat from a prior art APS process; and

FIGS. 3A and 3B are micrograph illustrations of a HV-APS ceramic (YSZ) thermal barrier coating over a conventional APS bond coat.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment, can be used with another embodiment to yield a still further embodiment. Thus, it is intended that the present invention covers such modifications and variations as come within the scope of the appended claims and their equivalents.

As previously discussed, thermal barrier coating (TBC) systems are often used to improve the efficiency and performance of metal parts which are exposed to high temperatures, such as turbine components. The combustion gas temperatures present in turbines are maintained as high as possible for operating efficiency. Turbine combustion components and other elements of the engine are usually made of alloys which can resist the high temperature environment, e.g., superalloys, which have an operating temperature limit of about 1000-1150 degrees Celsius. The thermal barrier coatings effectively increase the operating temperature of the turbine by maintaining or reducing the surface temperature of the alloys used to form the various engine components. Most thermal barrier coatings are ceramic-based, e.g., based on a material like zirconia (zirconium oxide), which is usually chemically stabilized with another material such as yttria. For a turbine, the coatings are applied to various surfaces, such as turbine blades and vanes, combustor liners, and combustor nozzles.

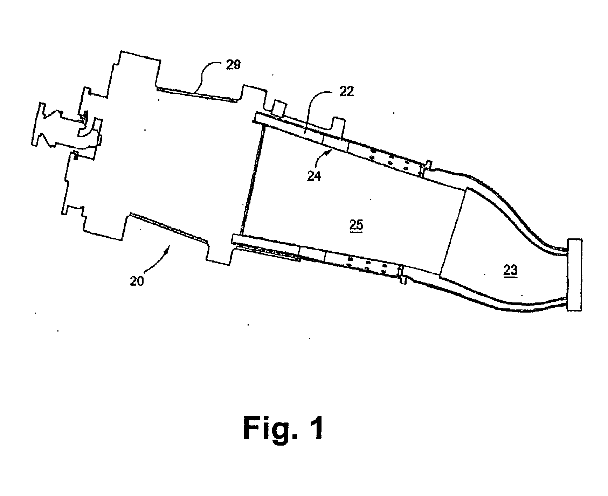

FIG. 1 illustrates a conventional combustion chamber 20 of a gas turbine, which includes a number of components that generally require a thermal barrier coating. A circular array of these chambers 20 are disposed around the center of the gas turbine and receive fuel from the fuel system and compressed air from the turbine compressor. The combustion chamber 20 comprises a compressed air inlet duct, a flow sleeve 22, and combustion gas exhaust duct or transition piece 23 to direct combustion air to the turbine. The flow sleeve 22 houses a combustion liner 24, and in turn the combustion liner 24 defines a combustion zone 25. A combustion casing 29 is provided in the combustion system and houses each of the combustion chambers 20 and attaches the chamber to a housing of the gas turbine. The combustion liner 24 is coaxially mounted within the flow sleeve 22. The combustion liner 24 and flow sleeve 22 are both coaxially mounted within the combustion casing 29.

The combustion liner 24 comprises a generally conical configuration having an inlet end that is generally aligned with a fuel nozzle. The combustion liner 24 also defines an exhaust end. The exhaust end is coupled to the transition piece 23 define a flow passage for combustion gases from the combustion system.

As understood in the art, thermal barrier coatings have been critical for protecting the various surfaces of the combustion chamber components. A number of coating systems are used for this purpose. Such systems typically include an oxidation-resistant bond coat initially applied to the substrate. The bond coat alone may serve as the protective coating, or may underline a subsequently applied thermal barrier material, such as one of the ceramic materials discussed above, for which the bond coat is critical in promoting adhesion and extending the service life of the TBC system. As mentioned, the present invention involves an improved APS method for depositing the bond coat on the substrate, particularly for coating inside surfaces of combustion components.

APS techniques and systems are generally well known in the art and need not be described in great detail herein. Plasma spraying techniques in general use an electric arc to heat various gasses, such as air, oxygen, nitrogen, argon, helium, or hydrogen, to temperatures of about 8000.degrees Celsius, or higher. When the process is carried out in an air environment, it is referred to as an "Air Plasma System". The gasses are expelled from an annulus at a velocity that is a function of anode nozzle diameter, creating a characteristic thermal plume. Powder material (e.g., MCrAlY alloy particles in the case of a bond coat, or zirconia-based particles in the case of a thermal barrier) is fed into the plume, and the melted particles are accelerated toward the substrate being coated. A system that incorporates an inert gas shroud around the nozzle component to reduce the intake of oxygen is not considered an APS system for purposes of the present disclosure.

The typical plasma spray system includes a plasma gun anode which has a nozzle pointed in the direction of the deposit-surface of the substrate being coated, e.g., the airfoil section of a turbine blade. The plasma gun is often controlled automatically, e.g., by a robotic mechanism, which is capable of moving the gun in various patterns across the substrate surface. The plasma plume extends in an axial direction between the exit of the plasma gun anode and the substrate surface.

Some type of powder injection means is disposed at a predetermined, desired axial location between the anode and the substrate surface. In some cases, the powder injection means is spaced apart in a radial sense from the plasma plume region, and an injector tube for the powder material is situated in a position so that it can direct the powder into the plasma plume at a desired angle. The powder particles, entrained in a carrier gas, are propelled through the injector and into the plasma plume. The particles are then heated in the plasma and propelled toward the substrate. The particles melt, impact on the substrate, and quickly cool to form the bond coat or thermal barrier coating.

Unlike conventional APS systems, in accordance with the present invention a particle velocity of at least 400 meters per second (m/s) is maintained in the HV-APS process. In some specific embodiments, the velocity is at least about 450 m/s, and may also be in the range of about 400 m/s to about 700 m/s, or more specifically in the range of about 400 m/s to about 500m/s. These particle velocities are substantially greater than the typical velocities used in conventional APS systems. As an example, a plasma spray gun in a typical APS process would provide coating particle velocities in the range of about 150-250 meters per second.

Various techniques are available for measuring particle velocity downstream from the plasma gun exit, using a variety of sensor systems. As a non-limiting example, measuring systems for determining particle velocity and particle velocity distribution are described in U.S. Pat. No. 6,862,536 (Rosin). One example of an on-line particle monitoring and measurement device which is commercially available is the DPV-2000 system, available from Tecnar Automation Ltd, Montreal, Canada (http://www.tecnar.com/).

The present HV-APS process may be used with commercially available MCrAlY alloy powders having conventional particle size distribution ranges. For example, Praxair Inc. of Danbury, Connecticut (USA) offers a number of Cobalt based and Nickel based MCrAlY powders suitable for use in the present HV-APS process, including Praxair NI-343 having a particle size distribution range of -45 / +10 µm (d10 percentile of approximately 10 µm; d90 percentile of approximately 45µm). Sulzer Metco Diamalloy 4700 is another example of a suitable MCrAlY alloy powder having a particle size distribution range of -45 / +15 um. The particle composition, size, and velocity are all factors that produce a bond coat having a surface roughness of about 300 to about 500 pinch Ra is achieved (Arithmetic Average Roughness (Ra) as determined from ANSI/ASME Standard B461-1985). The rough surface serves to ensure good adhesion between the bond coat and a subsequently applied thermal barrier material.

Bond coats according to the present process may be formed having any suitable thickness. Typical bond coats are within a range of about 25 µm to about 750 µm, such as about 100 µm to about 400 µm.

The resulting MCrAlY bond coat also has a density of at least 90% of theoretical density, and more particularly about 95% density. These densities reflect a decreased oxide content in the bond coating, as compared to conventional APS processes, which greatly increases the effective TBC life and the substrate life against oxidation. Decreased oxide content in the bond coat (as reflected by an increased density) inhibits detrimental growth of thermally grown oxide (TGO) at the interface of the bond coat and TBC coating during service of the component. It is generally accepted that TGO accelerates TBC failures, such as cracking, delamination, and spalling.

The present process also encompasses application of a thermal barrier coating applied over the bond coat. The process is not limited to any particular type of thermal barrier material, and may include any of the various ceramic materials discussed above, particularly zirconia (ZrO₂) stabilized by yttria (Y₂ O₃), magnesia (MgO), ceria (CeO₂), scandia (Sc₂O₃), or another oxide. The ceramic barrier material may be deposited by any suitable know technique, such as by physical vapor deposition (PVD) techniques, particularly electron beam physical vapor deposition (EBPVD), or conventional APS techniques.

In a desirable process embodiment, the ceramic barrier material is also deposited by an HV-APS process, wherein the ceramic composition particles are applied at a particle velocity of at least 400 meters per second (m/s). The particle velocity may be in the range of about 400 m/s to about 700 m/s. In some specific embodiments, the velocity is at least about 450 m/s, and may be about 600m/s. The HV-APS process produces a more strain tolerant, dense vertically-crack TBC (DVC-TBC) at a relative lower deposition temperature (≤550 degrees Fahrenheit). The higher particle velocity (e.g., about 600 m/s) promotes better splat-to-splat bonding and reduces splat-to-splat voids. The improved splat-to-splat bonding improves coating density and hence coating tensile strength, as well as promotes coordinated vertical micro cracks. It is believed that high particle velocity plays essentially the same role as the deposition temperature in forming DVC-TBCs, as described for example in U.S. Pat. No. 6,306,517. Because of the relatively large size of turbine combustion components, it is difficult to attain high deposition temperatures (i.e., >550 degrees Fahrenheit) with conventional low velocity APS processes.

Commercially available yttria stabilized ceramic coating particles may be used for the TBC material, for example, Sulzer Metco 240NS 8 wt % yttria stabilized zirconia powder having a particle size distribution range of about -125 / +11 µm (d10 percentile of approximately 11 µm; d90 percentile of approximately 125 µm), or Sulzer Metco 240NA powder having a particle size distribution range of about -97 / +25 µm.

In a particularly unique embodiment, the yttria stabilized ceramic coating particles may have an average particle size no greater than about 50 microns. In some specific embodiments, the average particle size is no greater than about 25 microns. The minimum, average particle size for such embodiments may be about 1 micron. It is thought that, in some instances, particles smaller than about 1 micron may not effectively deposit on the target-surface after traveling through the air plasma. See, for example, an article by Berghaus, et. al., entitled "Injection Conditions and in-Flight Particle States in Suspension Plasma Spraying of Alumina and Zirconia Nano-Ceramics," Proceeding of 2005 International Thermal Spray Conference, Basel, Switzerland, May, 2005. A preferred particle size for some situations is in the range of about 5 microns to about 50 microns. In some especially preferred embodiments, the particle size is in the range of about 5 microns to about 25 microns, i.e., substantially all of the particles within a given sample fall into that size range. In general, these particle sizes are substantially smaller than a typical ceramic TBC material used in APS, such as the Sulzer Metco 204NS 8 wt % yttria stabilized zirconia powder discussed above. A detailed discussion of HV-APS application of yttria stabilized ceramic coating particles having an average particle size no greater than about 50 microns is contained in the commonly owned U.S. Pat. Publication No. 2009/0162670.

Conventional APS systems can be modified to effectively increase the plasma velocity and hence, the particle velocity, according to this invention. In general, modification of the APS system in this instance involves the selection of different configurations of anode nozzles which fit into the plasma spray guns. In the present case, commercial air plasma spray guns equipped with high-velocity anode nozzles can be employed to carry out the high velocity air plasma spray (HV-APS) process. Non-limiting examples include the 7 MB (or 9 MB, or 3MB) plasma spray gun equipped with the 704 high velocity nozzle, available from Sulzer Metco, Inc. Another example is the SG100 plasma spray gun, operated in the "Mach 2" mode, available from Praxair Surface Technologies, Inc. These conventional APS gun systems may be operated in a power range of, for example, 30 -50 KW.

The temperature of the coating particles within the plasma can also be a significant consideration for the present invention. In general, the temperature of the coating particles during air plasma-spraying is at least the melting temperature of the ceramic material. In some preferred embodiments, the coating particle temperature should be greater than the melting temperature of the material, e.g., at least about 100 degrees C greater than its melting point, and in some especially preferred embodiments, at least about 200.degree. C greater than its melting point. Those skilled in the art are familiar with adjustments in the APS systems (such as power levels) which will serve to heat the coating particles to the desired temperature.

Those of ordinary skill in the plasma spray coating art are familiar with other details which are relevant to applying coatings by APS techniques. Examples of the other steps and process parameters include: Cleaning of the surface prior to deposition; grit blasting to remove oxides; substrate temperature; plasma spray parameters such as spray distances (gun-to-substrate); selection of the number of spray-passes, powder feed rate, torch power, plasma gas selection; angle-of-deposition, post-treatment of the applied coating; and the like.

The thickness of the ceramic coating will depend on the end use of the part being coated. In the case of thermal barrier coatings, the thickness is usually in the range of about 100 microns to about 2500 microns. In some specific embodiments for end uses such as airfoil components, the thickness is often in the range of about 125 microns to about 750 microns.

Combustion component parts are exemplified as the "metal substrate" in this patent specification. However, many types of turbine components can benefit from the various embodiments of this invention. Non-limiting examples include buckets, nozzles, rotors, disks, vanes, stators, blisks, shrouds, and transition pieces. Moreover, the components can be part of land turbines, aircraft engine turbines, or marine turbines. Furthermore, other types of components could serve as metal substrates for the ceramic coatings. As one example, the substrate may be the piston head of a diesel engine, or other automotive parts. It should be readily appreciated that the invention is not limited to any particular type of metal substrate or component.

### Examples

The following examples are merely illustrative, and should not be construed to be any sort of limitation on the scope of the claimed invention.

### Example 1

A Sulzer Metco 3 MB APS system was configured with a high velocity 704 nozzle and used to deposit a Praxair Co249-6 MCrAlY bond coat powder onto an inconel (IN718) test substrate. The Praxair powder is comparable to the Praxair NI-343 having a particle size distribution range of -45 / +10 µm, and Sulzer Metco Diamalloy 4700 powder having a particle size distribution range of -4.5 / +15 um cited above. Particle temperature and velocity measured by a DPV sensor were, respectively, about 2200° C and about 450 m/s. The substrate was then vacuum heat treated at 2050° F for about 2 hours. Tensile bond strength of the HV-APS bond coat was then measured at about 10000 psi. The tensile testing was carried out according to ASTM C633-01 (the standard bond test). The bond coat had a density of about 95% of theoretical density.

### Example 2

A number of Ni-based (Rene N-5) superalloy test buttons were coated with a bond coat as described in Example 1. Each button had an outer diameter of about 1 inch (2.54 cm) and a thickness of about 1/8 inch (0.3 cm). A ceramic TBC barrier coat was then applied to the bond coat in an APS process with a Sulzer Metco OC3X APS system and a yttria stabilized ceramic powder comparable to the Sulzer Metco 240NS 8 wt % yttria stabilized zirconia powder having a particle size distribution range of about -125 / +11 µm discussed above.

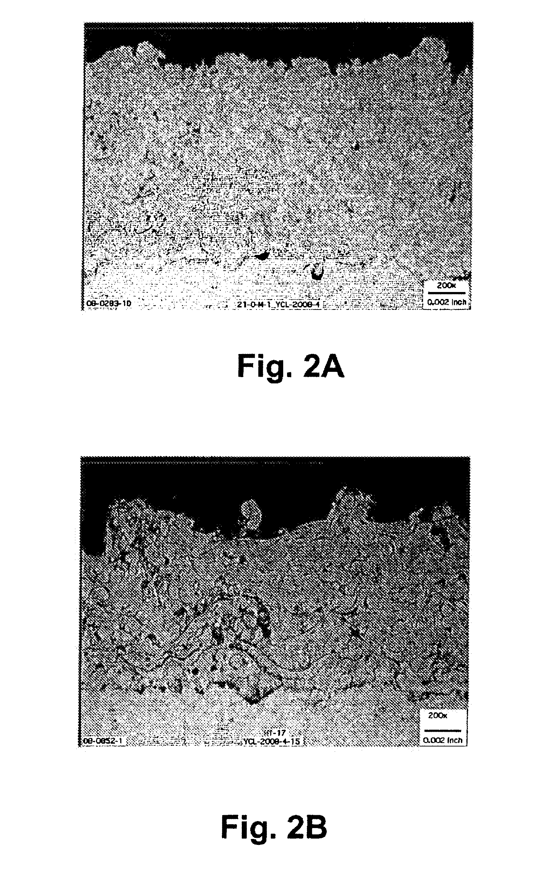

The buttons were tested for TBC endurance in a furnace cycle test (FCT) by raising the sample temperature to 2000° F in about 10 minutes in a button-loading CM furnace, followed by a hold period of 45 minutes; and then cooling to less than 500° F in about 9 minutes. The cycle is repeated until more than 20% of the surface area of the ceramic coating spalls from the underlying surface. The average number of cycles of the test buttons in the FCT test until TBC failure was about 300. A micrograph picture of one of the test buttons with the HV-APS bond coat is provided as FIG. 2A.

### Comparative Example 1

The process described above in Example 2 was repeated with the same materials and test buttons, with the exception that the bond coat was applied in a conventional APS process with a Sulzer Metco O3CX APS system at a particle velocity of about 200 m/s. The average number of cycles of these test buttons in the FCT test until TBC failure was about 200, which is significantly less than the 300 cycles for the HV-APS bond coat buttons. A micrograph picture of one of the test buttons with the conventional APS bond coat is provided as FIG. 2B. In a comparison of the micrographs of FIGS. 2A and 2B, it can be seen that the HV-ABS bond coat (FIG. 2A) is significantly more dense (about 95% density) and has significantly less oxide content (dark areas and lines of FIG 2B) than the conventional ABS bond coat (FIG. 2B).

### Example 3

The process described above in Example 2 was repeated with the same materials and process parameters on a different Ni-based superalloy (comparable to Hastelloy-X). The average number of cycles of the test buttons in the FCT test until TBC failure was about 330.

### Comparative Example 2

The process described above in Example 2 was repeated with the same materials and test buttons in Example 3, with the exception that the bond coat was applied in a conventional APS process with a Sulzer Metco O3CX APS system at a particle velocity of about 200 m/s. The average number of cycles of these test buttons in the FCT test until TBC failure was about 180, which is significantly less than the 330 cycles for the HV-APS bond coat buttons of Example 3.

### Example 4

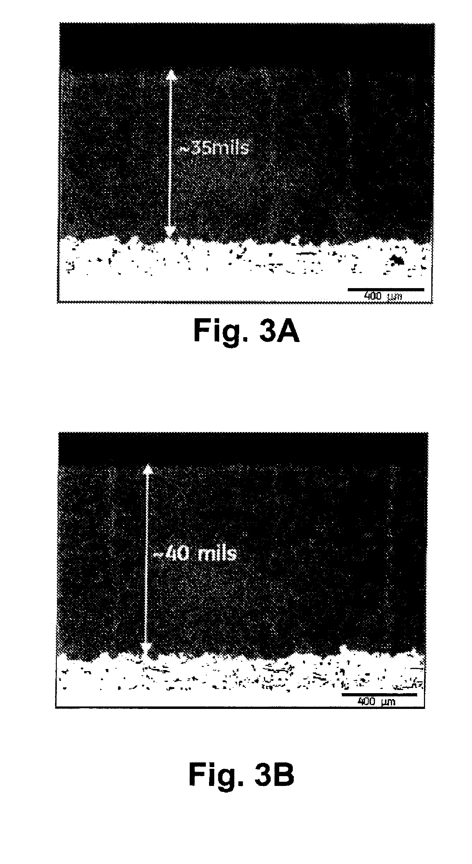

A number of Ni-based (Rene N-5) superalloy test buttons were coated with a bond coat in a conventional APS process with a Sulzer Metco O3CX APS system at a particle velocity of about 200 m/s. A ceramic TBC barrier coat of a yttria stabilized zirconia powder from H. C. Starck (Amperit 825.0) with a particle size between 5 to 22 µm was applied in a HV-APS process with a Sulzer Metco 7 MB system configured with a high velocity 704 at a particle velocity of about 600 m/s. Figs. 3A and 3B are micrographs of the resulting TBC coating. The samples had a vertical crack density of about 55 cracks per inch, a tensile strength of about 7000 psi, and an in-plane modulus of between about 200 - 250 ksi.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. An air plasma spraying (APS) method for applying a protective coating system to a superalloy metal substrate, comprising:
air plasma spraying (APS) bond coat particles onto the metal substrate, the bond coat particles comprising a MCrAlY alloy, where M is at least one of iron, cobalt, or nickel;
maintaining a particle velocity of at least 400 meters per second (m/s) in the APS process;
using bond coat particles in the APS process having a particle size distribution range and composition so that a resulting bond coat on the metal substrate has a surface roughness of about 300 to about 500 µinch Ra; and
the resulting bond coat having a density of at least 90% of theoretical density.

2. The method of claim 1, wherein the resulting bond coat has a density of at least 95% of theoretical.

3. The method of claim 1 or claim 2, wherein the APS particle velocity is in a range of 400 m/s to 700 m/s.

4. The method of any preceding claim, wherein the APS particle velocity is in a range of 400 m/s to 500 m/s.

5. The method of any preceding claim, further comprising applying a ceramic thermal barrier coat over the bond coat.

6. The method of claim 5, wherein the ceramic thermal barrier coat comprises particles of zirconia stabilized by any one of yttria, magnesia, ceria, or other oxide material.

7. The method of claim 5 or claim 6, wherein the ceramic thermal barrier coat is applied in an APS process with ceramic particles having a particle size distribution range of about 11 µm to about 125 µm and a particle velocity of at least 400 meters per second (m/s).

8. The method of claim 5 or claim 6, wherein the ceramic thermal barrier coat is applied in an APS process with ceramic particles having a particle size distribution range of about 5 µm to about 25 µm and a particle velocity of at least 500 meters per second (m/s).

9. The method of any preceding claim, wherein the metal substrate is a portion of a turbine component.

10. A superalloy metal component having a protective coating system applied thereto, said component comprising:
a superalloy metal substrate;
an air plasma sprayed (APS) bond coat applied to the superalloy metal substrate, the bond coat sprayed from MCrAlY alloy particles, where M is at least one of iron, cobalt, or nickel, at an APS particle velocity of at least 400 meters per second (m/s);
the bond coat having a surface roughness of about 300 to about 500 pinch Ra; and
the bond coat having a density of at least 90% of theoretical density.

11. The component of claim 10, wherein the bond coat has a density of at least 95% of theoretical density.

12. The component of claim 10 or claim 11, further comprising a ceramic thermal barrier coat applied over the bond coat, wherein the ceramic thermal barrier coat comprises zirconia stabilized by any one of yttria, magnesia, ceria, or other oxide material.

13. The component of claim 12, wherein the ceramic thermal barrier coat is applied in an ABS process with stabilized zirconia particles having a particle size distribution range of about 11 µm to about 125 µm and a particle velocity of at least 400 meters per second (m/s).

14. The component of claim 12, wherein the ceramic thermal barrier coat is applied in an APS process with stabilized zirconia particles having a particle size distribution range of about 5 µm to about 25 µm and a particle velocity of at least 500 meters per second (m/s).

15. The component of any one of claims 10 to 14, wherein the component comprises at least a portion of an inside surface of a turbine combustion component.
